# EUROPEAN PATENT APPLICATION

(11) **EP 4 492 917 A1**
(43) Date of publication of application: **15.01.2025**
(21) Application number: 23382704.7
(22) Date of filing: 10.07.2023
(51) Int. Cl.: H05B 6/12, A47J 27/00, H01F 41/074

(54) **STRUCTURE FOR MANUFACTURING AN INDUCTION COIL, INDUCTION COIL WITH SUCH A STRUCTURE AND METHOD OF MANUFACTURING SUCH AN INDUCTION COIL**

(71) Applicant: E.G.O. Elektro-Gerätebau GmbH, 75038 Oberderdingen (DE)
(72) Inventor: Capellá Prieto, Esther, 08185 Llicà de Vall (ES); Millán Serrano, Ignacio, 08185 Llicà de Vall (ES)
(74) Representative: Patentanwälte Ruff, Wilhelm, Beier, Dauster & Partner mbB

(57) **Abstract**

A structure for manufacturing an induction coil comprises eight flat support arms being fixed to a central connecting part to which the support arms are fixed with an inner free end, their outer free ends being free. At least two elongate retaining brackets are provided on each support arm extending in their longitudinal direction. A plurality of retaining openings for the retaining brackets is provided on each support arm along its longitudinal direction. Each retaining bracket is fastened at its two ends with rivets in the retaining openings. One longitudinal slot is provided on each support arm along its longitudinal direction, wherein each retaining opening is connected to the corresponding longitudinal slot by means of a short connecting slot. The retaining brackets are held in a first fastening position as an assembly/transport position on the longitudinal slot, and can be retained in the retaining openings in a second fastening position as an end position, which end position is different from the first fastening position. This allows for a relative movement of the induction coil windings underneath the retaining brackets along the support arms.

## Description

### Field of application and prior art

The invention is directed to a structure for manufacturing an induction coil, to an induction coil comprising induction coil windings on such a structure, and finally to a method of manufacturing such an induction coil.

It is known for example from WO 2007/124891 A1 to provide an induction coil in spherical form to the outside of a bowl-shaped structure. This induction coil serves to heat up metallic cooking vessels placed within the structure.

Another such spherical induction coil is known from DE 10 2008 052 815 A1. The induction coil windings are each placed approximately at regular spacings.

### Problem and solution

It is an object of the invention at hand to provide a structure for manufacturing an induction coil, an induction coil having such a structure as well as a method of manufacturing such an induction coil with such a structure, wherein preferably storage and transport of the induction coils are easy and safe and furthermore a manufacturing of the induction coil is particularly easy.

This object is solved by a structure with the features of claim 1, an induction coil with the features of claim 10 as well as a method with the features of claim 13. Advantageous and preferred configurations of the invention are the subject of the further claims and are explained in more detail below. In this case, some of the features may be described only for the structure, only for the induction coil or only for the method of its manufacturing. However, regardless of this, they are intended to be able to apply by themselves for the structure and for the induction coil and for the method of its manufacturing independently of one another. The wording of the claims is made to the content of the description by means of express references.

The structure for manufacturing an induction coil according to the invention comprises at least four elongated support arms, for example eight arms or more, preferably with an even number. The support arms are flat and flexible such that they can be bent. To be flat can mean that their thickness can be between 5 times and 30 times their width. Their length can be at least ten times their width, up to twenty times or or thirty times or more. The structure has a central connecting part or connecting area to which the support arms are fixed with inner free ends. Such a fixing can in particular be non-rotatable, such that the structure is not to be changed in this arrangement. An outer free end of the arms is preferably free. In this regard, the structure may resemble a star or can be spoke-like, where the support arms protrude in radial direction from the central connecting part. At least one retaining bracket is provided on each support arm, in particular at least two retaining brackets, , preferably three to five or six brackets. The retaining brackets are elongate and extending in the longitudinal direction of the support arms with a distance above the support arms such that in the distance between the retaining bracket and the support arm there is space for a plurality of turns of an induction wire strand for an induction coil, preferably one layer of induction strand, wherein in particular a distance between the support arm and the retaining bracket is 2% to 40% greater than a thickness of the induction wire strand.

According to the invention, at least two or a plurality of retaining openings for retaining brackets are provided on each support arm along the longitudinal direction of the support arm, preferably exactly along this longitudinal direction. The retaining opening can be of round shape or longitudinal shape, alternatively. Each such retaining bracket can be fastened at its two ends with fastening means in the retaining openings, wherein the fastening means are generally designed to allow some movement of the bracket along the support arm. For this reason they can be designed to pierce through the support arms, for which pre-fabricated holes or slots are provided, especially in the retaining openings. The fastening means preferably are screws/nut combinations, fastening pins or rivets. In this way, the induction coil can be wound in a plane state onto the structure and be affixed with the retaining brackets. After this the structure is bent in curved manner of the support arms or into a round or spherical state as a whole.

In a preferred embodiment of the invention, at least one longitudinal slot is provided on each support arm and along its longitudinal direction, preferably parallel to the arm, wherein it may be displaced laterally from the central longitudinal axis of the arm. Each retaining opening is connected to the corresponding longitudinal slot by means of a short connecting slot, alternatively the retaining opening can have longitudinal shape to be directly connected to the longitudinal slot, in another embodiment even of angular shape. The retaining brackets are held in a first fastening position as an assembly/transport position on the longitudinal slot, such that the fastening means are inside the longitudinal slots and not in the retaining openings. In these retaining openings the retaining brackets are only or finally retained in a second fastening position, which is an end position. This end position is reached when the induction heating coil is affixed to a spherical vessel, which will be explained later on. The end position is different from the first fastening position, not only in that the fastening means are located in the retaining openings instead of in the longitudinal slot, but also in that the location of the retaining brackets along the support arms in the end position is different from the location in the assembly/transport position. So the longitudinal slot with its length or longitudinal extension serves for at least one retaining bracket to move along this extension and finally come to rest in the end position when the induction heating coil together with the structure is in its final shape.

In a further preferred embodiment of the invention, only one single longitudinal slot is provided per support arm, although there might be provided two or more of them, in particular parallel to each other. The longitudinal slot should or might be running parallel to the longitudinal direction of the support arm, either along a center line or displaced laterally to it for some millimetres. It can be provided that the center line runs exactly through the middle between the line of the retraining openings and the longitudinal slot or slots.

In another embodiment, a short slot section may lead in the direction from each retaining opening to the longitudinal slot away from the retaining opening to connect the retaining opening to the slot. Such a short slot section may be at least as long as a diameter or width of the retaining opening, in particular double or triple its length. The short slot section may preferably extend parallel to the longitudinal slot. The connecting slot can lead or extend from this slot section towards the longitudinal slot at a certain angle, which in particular may be at right angles. The short connecting slot may be at least as long as the width of the longitudinal slot such that it can be recognized as a distinct slot at all.

In a further embodiment, at least two, preferably a maximum of ten, retaining openings on one support arm are connected to the longitudinal slot. Their number can correspond the number of retaining brackets such that two openings are provided for each bracket, wherein this number can also be greater. The support arms can for example also be configured to receive different numbers of retaining brackets and/or brackets of different lengths.

It may further be provided for all support arms to be identically formed and/or to be circumferentially fastened to the connecting part, preferably in equidistant configuration. They can be formed with circumferentially the same orientation, in particular with regard to the relative location between retaining openings and longitudinal slots. The support arms may protrude in radial direction from the connecting part, such that in particular the structure may be formed in star-shape or with the arms as radial spokes protruding from the central connecting part. This connecting part may be formed in circular or ring-shaped form, wherein it may preferably have a central opening. This may serve for the purpose of being connected to a vessel or the like.

In a further embodiment of the invention, the retaining brackets are fastened at both their free ends to the support arm by means of the fastening means explained before, preferably screw-like or rivet-like fastening pins. The retaining brackets may have a wide retaining section between the two free ends. In this wide retaining section, each retaining bracket may hold a plurality of induction wire strands in position as induction coil windings of the induction coil on the support arm, in particular four to twenty or even thirty. These windings are preferably provided in one plane parallel to the plane of the flat support arm. Preferably, the windings are one next to the other, and none crosses another due to the restriction by the flat retaining bracket.

The fastening means or pins, respectively, should in particular pass or go through the support arm. Preferably, all the retaining brackets are applied to the support arms from one side, preferably being in contact with the arm, while they are fastened on the other side such that the counter means for completing the fixture by the fastening means are provided on this other side. This is especially preferred in the case of screws and nuts.

In further preferred embodiment of the invention, the retaining brackets with the fastening means can be displaced along the longitudinal slots, which is needed when the induction coil mounted onto the structure is bent, which will be described later on. The distance of the two fastening pins on one retaining bracket from each other along the longitudinal direction of the longitudinal slots may correspond to a distance of retaining openings, preferably of two neighbouring retaining openings.

Preferably the support arms may have a recess or a hole at an end facing away from the connecting part, which should be a free end. Such a recess or hole may serve to affix the free end of the bent support arm, preferably to a vessel carrying the induction coil.

A complete induction coil, which is mounted or affixed to the structure explained before, comprises induction coil windings of induction wire strand, which windings are mounted or positioned on this structure. This induction coil is spirally wound in several circular rings or close-circular rings or, to be more exactly, spiral rings of different diameter. This induction coil should in particular be wound in one layer as mentioned before. Each circular ring or spiral ring of the induction coil windings runs along the support arms or abuts against the support arms. In this area the induction wire strand abuts against the support arm and is fixed to it with a retaining bracket. So the retaining brackets may form groups of windings in one plane. Preferably, exactly one bracket is provided per circular ring or spiral ring of induction coil windings on each support arm, which may add up to two to five or six brackets on each support arm.

The induction coil in one alternative is wound from a single continuous induction wire strand. This induction coil has an inner terminal and an outer terminal, which terminals are formed respectively by a beginning and an end of said induction wire strand. Therebetween said induction coil windings are provided in continuous manner such that the wire strand is not interrupted. This induction coil can only be operated in whole.

In another alternative, the induction coil comprises at least two partial induction coils, each of which partial induction coils can be electrically connected and operated independently of the others. So the size and the power of the inductive heating may be varied. Each partial induction coil may be formed by at least one circular ring having several windings, and each partial induction coil has two electrical connections. In consequence, a partial induction coil may be made up of one or more circular rings of windings. Preferably, an innermost or an outermost circular ring may be a separate partial induction coil to better influence the size or area of inductive heating. Even more preferably, this should be the outermost circular ring.

An induction coil described before can be manufactured by use of a structure described before and onto it, respectively. For this manufacture, a structure as described before is provided in a plane, which should be planar or a plane, respectively. Induction wire strands are positioned or laid or wound onto the structure or onto the support arms of the structure, respectively. The order of winding may preferably be from the inside to the outside or from the connecting part to larger radii. This allows for the windings to be placed one onto the one before. The induction wire strands are in this case wound on radial inner holders of an apparatus for winding the induction coil. Each new induction coil winding is then applied radially outwardly to the already present inner induction coil winding. Alternatively, the induction coil can be wound in the reverse direction and manner from the outside to the inside. The induction coil is wound in at least two circular rings onto the structure, wherein they are spaced apart from each other. Preferably, the induction coil is wound onto the structure in four circular rings. The retaining brackets are attached for fastening the induction coil windings of induction wire strand to the support arms, wherein preferably the retaining brackets are attached each after the winding of each circular ring has been completed, and before the winding of the next circular ring will start. With this method, each circular ring of windings can be securely finished and be affixed before the next circular ring is begun with.

Furthermore, it may be provided that, when the winding has been completed, and after all retaining brackets have been attached, the induction coil is ready in a semi-finished state. In this state, it is not to be used for inductive heating, but can be stored and transported in very easy and advantageous manner. The induction coil is to be used in a spherical shape in regular use, preferably mounted to a spherical vessel, but in such a spherical shape it would need much more space and effort to store and to transport. So the mounting of the induction coil according to the invention in a flat or plane state as an interstage provides for some advantages.

When the induction coil shall be affixed to a cooking or heating vessel as final step, the induction coil together with the structure is spherically bent or curved from its planar shape into a curved shape. This is done in such a way that the retaining brackets with the induction wire strands held by the brackets are moved from the first position along the longitudinal slot via the connecting slot into the second position, which is in the retaining openings. So the retaining brackets are moved and their fastening means are moving along inside the slots into the retaining openings, which is their second and final position.

Furthermore, for mounting to a cooking vessel or the like, the support arms in their curved shape are located inside and towards the vessel. The induction coil windings are located outside. After this, the induction coil together with its structure will be fixed to the cooking vessel, preferably by screws.

These and further features are evident not only from the claims but also from the description and the drawings, the individual features each being implemented by themselves or in multiples in the form of subcombinations for an embodiment of the invention and in different fields and being able to be advantageous and independent protectable embodiments for which protection is claimed here. The division of the application into individual sections and subheadings does not limit the general validity of the statements made thereunder.

### Brief description of the drawings

- Fig. 1: a structure according to the invention with eight support arms centrally connected with a central ring in star-like configuration,
- Fig. 2: one of the support arms of Fig. 1 having various retaining openings, some of which are connected via a longitudinal slot,
- Fig. 3: an induction coil according to the invention with induction coil windings provided on the structure of Fig. 1 divided into four circular rings spaced apart,
- Fig. 4: a retaining bracket for fixing the induction coil windings to the support arms in a side view,
- Fig. 5: the induction coil of Fig. 3 with the induction coil windings fixed to the support arms with the retaining brackets of Fig. 4,
- Fig. 6: an enlarged view onto the support arm of Fig. 2 with the induction coil windings and the retaining brackets, wherein the retaining brackets are fixed in the longitudinal slot,
- Fig. 7: an enlarged and oblique view onto two circular rings of windings of the induction coil fixed to the support arm by retaining brackets inside the longitudinal slots,
- Fig. 8: a side view according to Fig. 4 on one retaining bracket fixing the windings of the induction coil to the support arm,
- Fig. 9: an oblique view onto an induction coil in flat shape according to Fig. 5 placed underneath a bowl-cooking vessel,
- Fig. 10: the cooking vessel of Fig. 9 with the induction coil and the support arms with the induction coil windings bent according to the shape of the vessel and fixed to it,
- Fig. 11: an enlarged view onto an upper region of one of the support arms with two circular rings of induction coil windings fixed to the support arm by retaining brackets.

### Detailed description of the embodiments

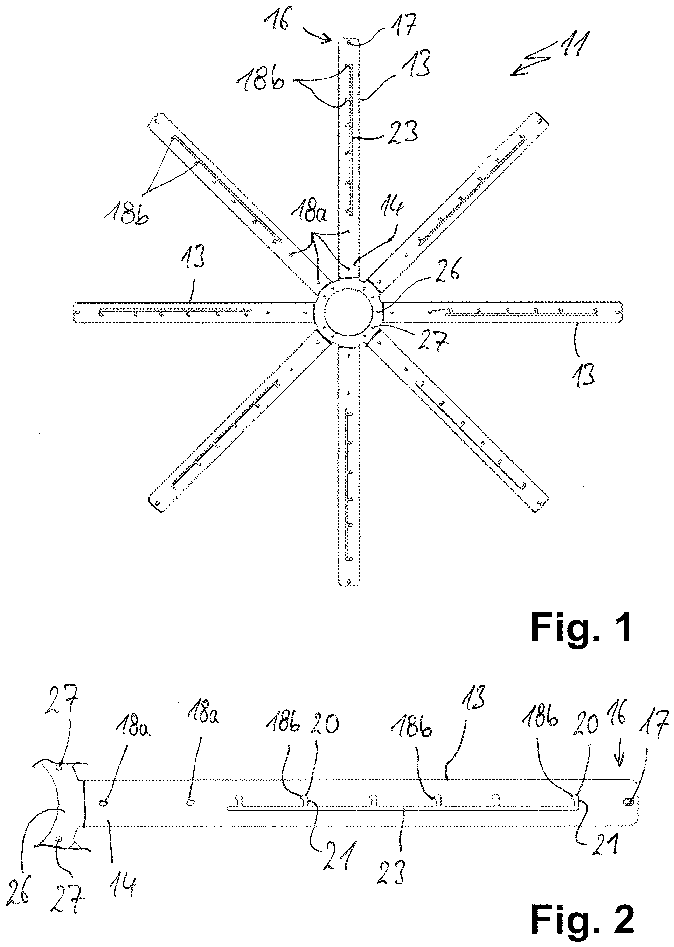

In Fig. 1, a plan view onto a structure 11 according to the invention is shown. The structure 11 has eight support arms 13 being fabricated from flat sheet metal with a width of approximately 0,8 cm to 5 cm and a length of between 10 cm and 60 cm. The support arms 13 are connected with an inner end 14 to a central ring 26 made up of the same sheet metal. Such a connection can be made via welding, screwing or rivets. In other embodiments not shown here, the support arms altogether can be made in one single piece, together with a central connection area or ring. Each support arm 13 has an outer free end 16 with a fixing hole 17 provided at the end. This fixing hole 17 serves for being mounted to the outside of a cooking vessel.

From the enlarged view onto the support arm 13 according to Fig. 2, it can be taken that close to the inner end 14 two retaining openings 18a are provided with a certain distance to each other. These retaining openings 18a can be provided along a central longitudinal direction of the support arm 13, or be slightly offset.

With some distance to the two retaining openings 18a, six further retaining openings 18b are provided in the support arm 13. They are placed along a straight line parallel to the longitudinal direction of the support arm 13. The retaining openings 18b are not so clearly distinguished or formed as single and separate openings, but are formed into short slot sections 20 having a direction parallel to the longitudinal direction of the support arm 13. Alternatively, the retaining openings 18b and the slot sections 20 can be viewed as one longitudinal opening.

From the slot sections 20, short connecting slots 21 lead to one long longitudinal slot 23, wherein the connecting slots 21 are arranged at approximately right angles to the other two slots. The longitudinal slot 23 is parallel to the longitudinal direction of the support arm 13. It has approximately the width of the connecting slots 21 and the slot sections 20, which may correspond also approximately to a diameter of the retaining openings 18a and 18b, for example 2mm to 4 mm. As can be seen in Fig. 2, the shape and arrangement of retaining openings 18b, slot sections 20 and connecting slots 21 are each identical. The length of the connecting slots 21 is about double or triple the diameter of the retaining openings 18b. The distance of the various retaining openings 18b to each other may vary, which can be seen in that the distance between the two retaining openings 18b closest to the outer free end 16 of the support arm 13 is slightly larger than with the others, which again may be equidistant to each other. The retaining openings 18 as well as the slots 20, 21 and 23 may be fabricated into a sheet metal for the support arm 13 by stamping or die cutting, respectively.

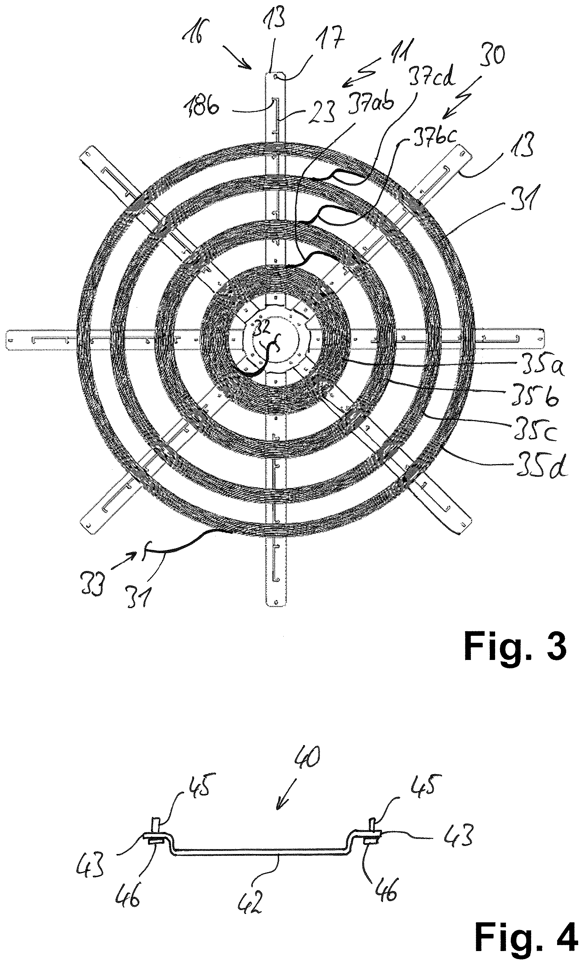

From the view of Fig. 3 it can be seen that an induction coil 30 according to the invention is wound onto the star-like structure 11 of Fig. 1. The induction coil 30 is made up of a single layer of induction wire strand 31, which is conventionally used for such induction coils. A winding order for the induction coil 30 may start with an inner terminal 32 of the wire strand 31, which may be wound spirally clockwise with the help of a respective winding apparatus as is known in the art. Holders or the like, which are not shown here, may be provided to exactly position the wire strand 31 onto the structure 11 with the support arms 13 in the shape as determined.

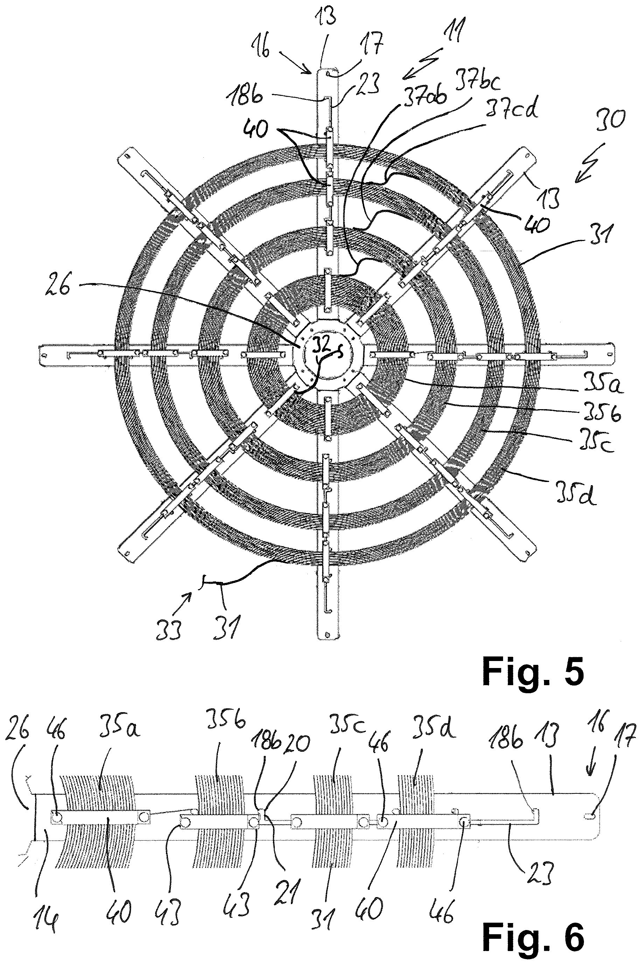

The induction coil 30 is wound with the wire strand 31 in four circular rings 35a to 35d. Each of these circular rings 35a to 35d can be made up of 5 to 20 or even 30 induction coil windings. A connecting strand 37ab leads from the innermost circular ring 35a to the next circular ring 35b. Radially outward of this in the same region, a connecting strand 37bc leads from the circular ring 35b to the circular ring 35c. Another such connecting strand 37cd leads from the circular ring 35c to the outermost circular ring 35d. As can be seen from Fig. 3, the innermost circular ring 35a has more induction coil windings than the other three circular rings, about 50% more, which can also be taken from Fig. 6. This number may of course be varied as seems fit for the best winding configuration of the induction coil 30 for a respective heat distribution. An outer terminal 33 of the wire strand 31 leads away from the outermost circular ring 35d. Both terminals 32 and 33 may be connected afterwards to an inverter or any other power supply as is known in the art.

In other embodiments of the invention, only one circular ring of induction wire strand is provided on a star-shaped structure. This single circular ring is held on each support arm with one retaining bracket each. The retaining brackets could be movable along the support arms, which will be explained hereinafter, or not.

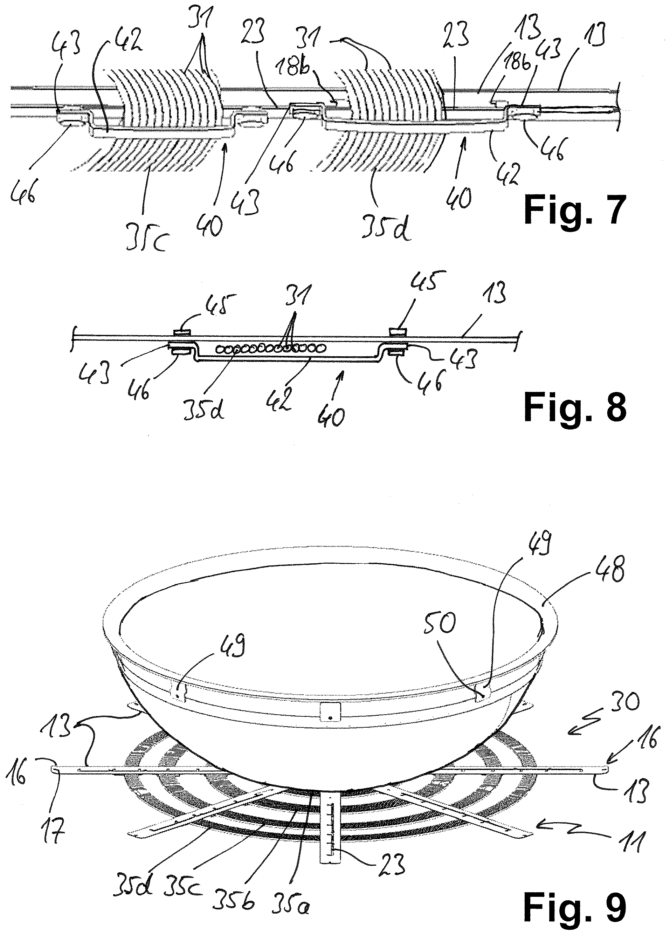

In Fig. 4, a side view onto a single retaining bracket 40 is shown. The retaining bracket 40 may also be made of sheet metal, for example the same sheet metal as the structure 11, alternatively from other material such as plastic or any electrically isolating material. The retaining bracket 40 has a broad retaining section 42 with free ends 43 at both sides. The height of the retaining bracket 40, as can be taken from the enlarged side view of Fig. 8, corresponds to about the thickness of the wire strand 31 plus 10% or 20%. At each free end 43, rivets 45 with rivet heads 46 lying in abutment against the free ends 43 are provided. Alternatively, these could be screws or other fixing means such as fastening pins or the like. The rivets 45 are not yet stamped for fixing.

In the view of Fig. 5, retaining brackets 40 according to Fig. 4 have been put onto the circular rings 35a to 35d overlapping them and been fixed to the support arms 13. From the enlarged view of Fig. 6 it can be taken that the innermost and the outermost retaining brackets 40 are slightly longer than the other two. The reason for this is that the innermost circular ring 35a per se is very wide and wider than the others. The outermost circular ring 35d is narrow as the others, but shall have more freedom to move. The number of windings of every circular ring 35a to 35d or winding of the coil depends on the heat distribution of the application that the induction coil is provided for.

So in this case, there are provided two types of retaining brackets 40. Alternatively, the retaining brackets 40 could all be of the same length. This length should be such to hold each winding of wire strand 31 in its final position. Ideally, the length of each bracket 40 should be the distance that the winding of wire strand 31 will occupy in the final mounting position such that the wire strands 31 have minimum space to entangle or no space at all. The eight innermost retaining brackets 40 are fixed to the retaining openings 18a, which means that they are holding the innermost circular ring 35a in one defined position. Neither circular ring 35a nor its retaining brackets 40 can move much or change their position after the fixing of the retaining brackets 40 to the support arm 13 via the rivets 45. These rivets 45 are finally fixed to the support arm 13 by conventional stamping. This can be made in such a way as to fix the retaining brackets 40 with their free ends 43 to the support arms 13.

Also the retaining brackets 40 for the other three circular rings 35b to 35d are placed over each pack of wire strands 31 of the induction coil windings and are fixed with the rivets 45 and the rivet heads 46 to the support arms 13 by stamping. As can be taken from Fig. 6, each of the rivets 45 is displaced in radial direction from the retaining openings 18b where they should finally be placed. They should also not be fixed too tight with the rivets 45 to the support arms 13 such that they can move inside the longitudinal slots 23 and along them.

From the oblique side view of Fig. 7 and the side view of Fig. 8 it can also be taken how the retaining brackets 40 with their retaining sections 42 are holding the wire strand 31 of the induction coil 30 of both circular rings 35c and 35d against the support arms 13. As explained before, this should be made in such a way as to hold them in the shape of the circular rings 35 such that the wire strands 31 remain in one plane and are lying next to each other. Still they should be able to move in radial direction relative to the support arm 13. Especially from the side view of Fig. 8 it can be taken that the wire strands 31 held by the retaining sections 42 against the support arm 13 should not have sufficient free space to move one above the other. This could otherwise disturb the winding order of the induction coil 30. So Figs. 3 to 8 show the method of the invention to manufacture the induction coil 30.

In Fig. 9, the induction coil 30 is placed underneath a cooking vessel 48 to which it shall be finally mounted. The induction coil 30 is placed in such a way that the circular rings 35a to 35d made up of the wire strand 31 are placed on the underside of the structure 11. The manufacturing of the structure 11 according to Fig. 1 and of the induction coil 30 according to Fig. 5 can take place at one location which is different from the location of where the induction coil 30 is mounted to the cooking vessel 48. The induction coils 30 can be easily packed and transported in this flat shape reducing cost and effort for transport. Another major advantage of the flat shape of the induction coils 30 according to Fig. 5 is that they can be packed easily in large numbers, for example by stacking them, to avoid any potential damage to it while their transport and storage.

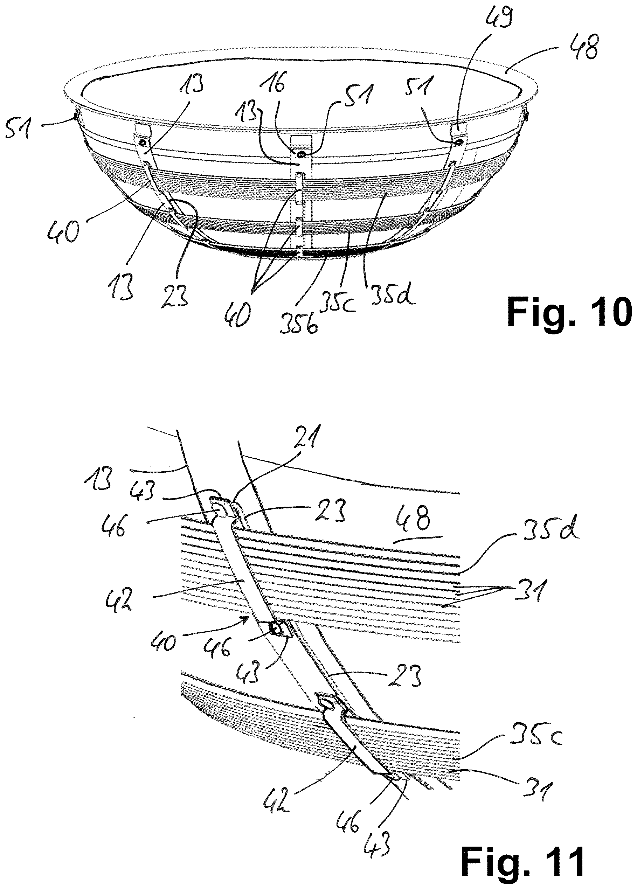

The induction coil 30 can be fixed, preferably via screws through the fixing holes 27 in the central ring 26 of the structure 11 to the underside of the cooking vessel 48, which is not shown here but can easily be imagined. After this, the induction coil 30 is spherically bent from its planar shape to correspond to the spherical shape of the cooking vessel 48. This bending of mainly the support arms 13 can be made manually or with a machine, where the end position is shown in Fig. 10. While during this bending of the induction coil 30 the innermost circular ring 35d is not bent very much close to its location to the center of the cooking vessel 48 and its fixed position with the retaining brackets 40 to the retaining openings 18a, the other circular rings 35b to 35d are moving relative to their position according to Fig. 5. Specifically, they are moving radially outwards towards the outer free ends 16 of the support arms 13. This relative movement is becoming increasingly more from the circular ring 35b to the outermost circular ring 35d. During this movement, the wire strands 31 of the induction coil windings are held against the support arms 13 by the retaining brackets 40 which again are moving with their rivets 45 in and along the longitudinal slots 23. In the final shape according to Fig. 10, each of the rivets 45 of the retaining brackets 40 moves from the longitudinal slots 23 over the connecting slots 21 as well as over the slot sections 20 into the retaining openings 18b. This can be taken from Fig. 11. For this final position, the retaining brackets 40 with their rivets 45 may be moved and positioned manually into the retaining openings 18b. It can be provided that there is some tension onto the wire strand 31 of the circular rings 35b to 35d in a direction towards the center point of the induction coil 30 such that, due to the shape and arrangement of the retaining openings 18b, the slot sections 20 and the connecting slots 21 to the longitudinal slots 23, the retaining brackets 40 are pulled by the wire strand 31 in a direction radially inward. This blocks the retaining brackets 40 from any movement radially outwards keeping them in the retaining openings 18b and, consequently, in a predefined position. The outer free ends 16 of the support arms 13 are fixed to fixing lugs 49 close to the upper rim of the cooking vessel 48. For this purpose, fixing screws 51 may be fixed in threads 50 of these fixing lugs 49.

The finished cooking vessel 48 according to Fig. 10 with the induction coil 30 positioned on its outside and fixed to it can be mounted into any cooking apparatus or kitchen, respectively. The induction coil 30 in its final spherical form extends along the outside of the cooking vessel 48 with a predefined distance to the cooking vessel 48 and in predefined circular rings 35a to 35d. From a comparison of Fig. 10 with Fig. 5 it is obvious that transport and storage of the induction coils 30 in their final spherical form would be much more complicated.

The configuration of the structure 11 should be adapted to the final shape of the induction coil 30, which again must be adapted to the shape of the cooking vessel 48. Other configurations of the circular rings 35 of the induction coil 30 can be provided by changing the shape and location of the various slots and retaining openings 18 in the support arms 13. The retaining brackets 40 are provided in two different lengths, wherein this may be reduced to one type of retaining bracket only.

## Claims

1. Structure for manufacturing an induction coil, said structure comprising:
- at least four elongated support arms, which are flat and bendable,
- a central connecting part to which the support arms are fixed with an inner free end, with an outer free end being free,
- at least one retaining bracket on each support arm, preferably at least two retaining brackets, the retaining brackets being elongate and extending in the longitudinal direction of the support arms with a distance above the support arms such that in the distance between the retaining bracket and the support arm there is space for a plurality of turns of an induction wire strand for an induction coil,
- at least two or a plurality of retaining openings for the at least one retaining bracket provided on each support arm located along the longitudinal direction of the support arm,
- each retaining bracket can be fastened at its two ends with fastening means in the retaining openings, the fastening means preferably being fastening pins or rivets.

2. Structure according to claim 1, **characterized in that**
- at least one longitudinal slot is provided on each support arm along its longitudinal direction,
- each retaining opening is connected to the corresponding longitudinal slot by means of a short connecting slot,
- the retaining brackets are held in a first fastening position as an assembly/transport position on the longitudinal slots,
- the retaining brackets are retained in the retaining openings in a second fastening position as an end position, which end position is different from the first fastening position.

3. Structure according to claim 1 or 2, **characterized in that** one single longitudinal slot is provided per support arm, preferably the longitudinal slot running parallel to the longitudinal direction of the support arm, in particular running along a center line.

4. Structure according to claim 2 or 3, **characterized in that** from each retaining opening connected to the longitudinal slot a short slot section leads in the direction away from the retaining opening, in particular at least as long as a diameter or width of the retaining opening, wherein preferably the short slot section extends parallel to the longitudinal slot, the connecting slot leading from this slot section at an angle, in particular at right angles, towards the longitudinal slot, preferably the short connecting slot being at least as long as the width of the longitudinal slot.

5. Structure according to one of the claims 2 to 4, **characterized in that** at least two, preferably a maximum of ten, retaining openings on one support arm are connected to the longitudinal slot.

6. Structure according to one of the preceding claims, **characterized in that** all support arms are identically formed and are circumferentially fastened to the connecting part, in particular with circumferentially the same orientation, wherein preferably the support arms protrude in radial direction from the connecting part.

7. Structure according to one of the preceding claims, **characterized in that** the retaining brackets are fastened at their free ends to the support arm by means of screw-like or rivet-like fastening pins, the retaining brackets preferably having a wide retaining section between their free ends, each retaining bracket holding a plurality of, in particular four to thirty, induction wire strands in position as induction coil windings of the induction coil on the support arm.

8. Structure according to claim 7, **characterized in that** the fastening pins pass through the support arm, all the retaining brackets being applied to the support arms from one side and fastened from the other side.

9. Structure according to claim 8, **characterized in that** the retaining brackets with the fastening pins are displaceable along the longitudinal slots, and the distance of the fastening pins on one retaining bracket from each other along the longitudinal direction of the longitudinal slots corresponds to a distance of retaining openings.

10. An induction coil comprising induction coil windings of induction wire strand and a structure according to one of the preceding claims, on which the induction coil windings are positioned, wherein the induction coil is spirally wound in several circular rings of different diameter, in particular is wound in one layer, and each circular ring of the induction coil windings abuts against the support arms and in this area its abutment against the support arm is fixed with a retaining bracket.

11. Induction coil according to claim 10, **characterized in that** said induction coil is wound from a single continuous induction wire strand having an inner terminal and an outer terminal formed respectively by a beginning and an end of said induction wire strand and having therebetween said induction coil windings.

12. Induction coil according to claim 10, **characterized in that** the induction coil comprises at least two partial induction coils, each of which is electrically connectable independently of the other, in particular each partial induction coil being formed by at least one circular ring and each partial induction coil having two electrical connections.

13. A method of manufacturing an induction coil according to one of the claims 10 to 12 with a structure according to one of claims 1 to 9, **characterized in that** the following steps are carried out:
- providing a structure according to any one of claims 1 to 8 in a plane,
- positioning the induction wire strands on the structure or on the support arms of the structure, wherein the induction wire strands are wound on radially inner holders and each new induction coil winding is applied to the present induction coil winding, wherein the induction coil is wound in at least two circular rings spaced apart from each other,
- attaching the retaining brackets for fastening the induction coil windings of induction wire strand to the support arms, preferably after completion of the winding of each circular ring and before the start of the winding of the next circular ring.

14. The method according to claim 13, **characterized in that** after attachment of all retaining brackets, the induction coil is spherically bent or curved from a planar shape into a curved shape, preferably in such a way that the retaining brackets with the induction wire strands held by them are moved from the first position along the longitudinal slot according to claim 2 via the connecting slot into the second position in the retaining openings.

15. The method according to claim 14, **characterized in that** the support arms in the curved shape are located inside and the induction coil windings are located outside, wherein preferably the induction coil together with the structure is subsequently fixed, preferably screwed, to a cooking vessel.
